# EUROPEAN PATENT APPLICATION

(11) **EP 3 174 340 A1**
(43) Date of publication of application: **31.05.2017**
(21) Application number: 15824460.8
(22) Date of filing: 03.07.2015
(51) Int. Cl.: H04W 48/08, H04M 11/00, H04W 74/08, H04W 88/06

(54) **WIRELESS BASE STATION, USER TERMINAL, AND WIRELESS COMMUNICATION METHOD**

(30) Priority: 23.07.2014 JP 2014149501
(71) Applicant: NTT DOCOMO, INC., Chiyoda-ku Tokyo 100-6150 (JP)
(72) Inventor: TAKEDA, Kazuaki, Tokyo 100-6150 (JP); HARADA, Hiroki, Tokyo 100-6150 (JP); TAKEDA, Kazuki, Tokyo 100-6150 (JP); NAGATA, Satoshi, Tokyo 100-6150 (JP)
(74) Representative: Hoffmann Eitle
(86) International application number: PCT/JP2015/069332
(87) International publication number: WO 2016/013387

(57) **Abstract**

The present invention is designed so that the decrease of throughput can be reduced even when LBT is used in a radio communication system which runs LTE/LTE-A and/or the like in an unlicensed band. A radio base station communicates with a user terminal that can use a licensed band and unlicensed band, and has a detection section that detects signals transmitted from other transmission points, an acquiring section that acquires the identification numbers of transmission points corresponding to signals that are detected, and a transmission section that transmits data signals and demodulation reference signals in the unlicensed band, and sequences of the demodulation reference signals are linked with the identification numbers of the transmission points, and the transmission section transmits information about the identification numbers of the other transmission points to the user terminal.

## Description

### Technical Field

The present invention relates to a radio base station, a user terminal and a radio communication method that are applicable to next-generation communication systems.

### Background Art

In the UMTS (Universal Mobile Telecommunications System) network, the specifications of long term evolution (LTE) have been drafted for the purpose of further increasing high speed data rates, providing lower delays and so on (see non-patent literature 1). In LTE, as multiple-access schemes, a scheme that is based on OFDMA (Orthogonal Frequency Division Multiple Access) is used in downlink channels (downlink), and a scheme that is based on SC-FDMA (Single Carrier Frequency Division Multiple Access) is used in uplink channels (uplink). Also, successor systems of LTE (also referred to as, for example, "LTE-advanced" or "LTE enhancement" (hereinafter referred to as "LTE-A")) have been developed for the purpose of achieving further broadbandization and increased speed beyond LTE, and the specifications thereof have been drafted (Re. 10/11).

In the LTE-A system, a HetNet (Heterogeneous Network), in which small cells (for example, pico cells, femto cells and so on), each having local a coverage area of a radius of approximately several tens of meters, are formed within a macro cell having a wide coverage area of a radius of approximately several kilometers, is under study. Also, in relationship to HetNets, a study is in progress to use carriers of different frequency bands between macro cells (macro base stations) and small cells (small base stations), in addition to carriers of the same frequency band.

Furthermore, for future radio communication systems (Rel. 12 and later versions), a system ("LTE-U" (LTE Unlicensed)) to run LTE systems not only in frequency bands licensed to communications providers (operators) (licensed bands), but also in frequency bands where license is not required (unlicensed bands), is under study. In particular, a system that runs an unlicensed band on the premise that a licensed band is present (LAA: Licensed-Assisted Access) is also under study. Note that systems that run LTE/LTE-A in unlicensed bands may be collectively referred to as "LAA." A licensed band is a band in which a specific provider is allowed exclusive use, and an unlicensed band is a band which is not limited to a specific provider, and in which radio stations can be provided.

For unlicensed bands, for example, the 2.4 GHz band and the 5 GHz band where Wi-Fi and Bluetooth (registered trademark) can be used, and the 60 GHz band where millimeter-wave radars can be used are under study for use. Studies are in progress to use these unlicensed bands in small cells.

### Citation List

### Non-Patent Literature

Non-Patent Literature 1: 3GPP TS 36. 300 "Evolved UTRA and Evolved UTRAN Overall Description"

### Summary of Invention

### Technical Problem

The premise of existing LTE/LTE-A is that it is run in licensed bands, and therefore each operator is allocated a different frequency band. However, unlike a licensed band, an unlicensed band is not limited to use by a specific provider. Furthermore, unlike a licensed band, an unlicensed band is not limited to use in a specific radio system (for example, LTE/LTE-A, Wi-Fi, etc.). Consequently, there is a possibility that the frequency band which a given operator uses in LAA overlaps the frequency band which another operator uses in LAA and/or Wi-Fi.

Consequently, when LTE/LTE-A (for example, LAA) is run in an unlicensed band, LTE/LTE-A needs to operate taking into consideration the cross-interference with other systems such as Wi-Fi, LAA by other operators, and so on. In order to prevent this cross-interference, a study is in progress to allow a radio base station and/or a user terminal to perform "listening" before transmitting a signal in an unlicensed band, and check whether communication is in progress in other transmission points (also referred to as "APs" (Access Points), "TPs" (Transmission Points) and so on). This listening operation is also referred to as "LBT" (Listen Before Talk).

However, when a radio base station (also referred to as an "LAA base station," "LTE-U base station" and so on) controls transmissions (for example, decides whether or not transmission is possible) based on LBT results, there is a threat that the opportunities to transmit signals to user terminals may be limited significantly depending on LBT results, which then leads to a decrease of throughput.

The present invention has been made in view of the above, and it is therefore an object of the present invention to provide a radio base station, a user terminal and a radio communication method, which can reduce the decrease of throughput even when LBT is used in a radio communication system that runs LTE/LTE-A and/or the like in an unlicensed band.

### Solution to Problem

A radio base station, according to one aspect of the present invention, communicates with a user terminal that can use a licensed band and an unlicensed band, and this radio base station has a detection section that detects signals transmitted from other transmission points, an acquiring section that acquires identification numbers of transmission points corresponding to signals that are detected, and a transmission section that transmits data signals and demodulation reference signals in the unlicensed band, and, in this radio base station, sequences of the demodulation reference signals are linked with identification numbers of the transmission points, and the transmission section transmits information about identification numbers of the other transmission points to the user terminal.

### Advantageous Effects of Invention

According to one aspect of the present invention, it is possible to reduce the decrease of throughput even when LBT is used in a radio communication system that runs LTE/LTE-A and/or the like in an unlicensed band.

### Brief Description of Drawings

FIG. 1 is a diagram to show an example of a mode of operation in the event LTE is used in an unlicensed band;
FIGs. 2 provide diagrams to show examples of modes of operation in the event LTE is used in an unlicensed band;
FIG. 3 is a diagram to show intra-cell interference and inter-cell interference in an unlicensed band;
FIG. 4 is a diagram to explain intra-operator synchronization in an unlicensed band;
FIG. 5 is a diagram to explain the LBT operation in the event of intra-operator synchronization in an unlicensed band;
FIG. 6 is a diagram to explain inter-operator synchronization in an unlicensed band;
FIG. 7 is a diagram to explain the LBT operation in the event of inter-operator synchronization in an unlicensed band;
FIGs. 8 provide diagrams to explain examples of allocation of channels and reference signals in a licensed band and an unlicensed band;
FIG. 9 is a diagram to explain the LBT operations in the event a plurality of operators form neighboring transmission points;
FIG. 10 is a diagram to show an example of a table in which information about other transmission points (operator IDs and transmission point IDs) is configured;
FIG. 11 is a schematic diagram to show an example of a radio communication system according to the present embodiment;
FIG. 12 is a diagram to explain an overall structure of a radio base station according to the present embodiment;
FIG. 13 is a diagram to explain a functional structure of a radio base station according to the present embodiment;
FIG. 14 is a diagram to explain an overall structure of a user terminal according to the present embodiment; and
FIG. 15 is a diagram to explain a functional structure of a user terminal according to the present embodiment.

### Description of Embodiments

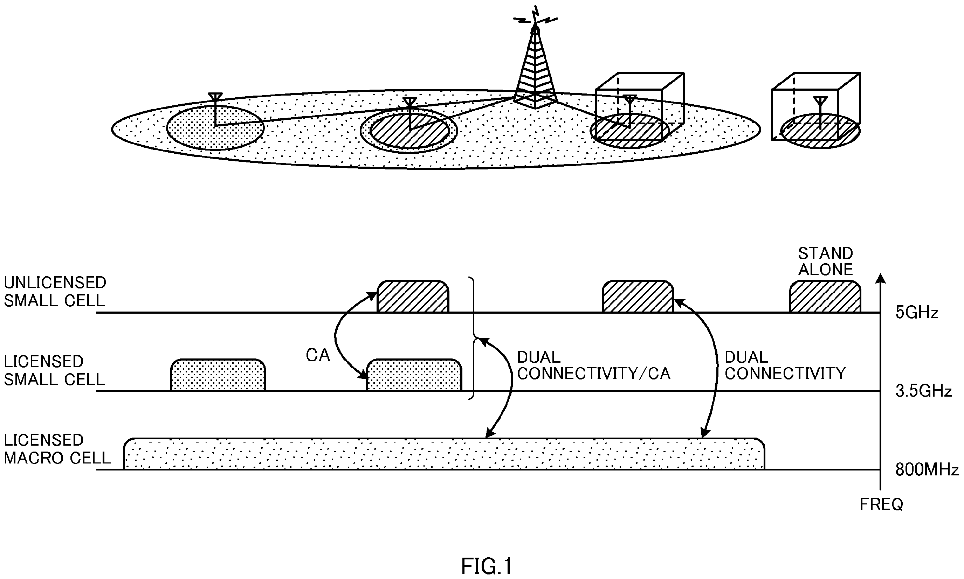

FIG. 1 shows an example of a structure of a radio communication system (LTE-U) which runs LTE in an unlicensed band. As shown in FIG. 1, there may be a plurality of possible scenarios to use LTE in an unlicensed band, such as carrier aggregation (CA), dual connectivity (DC) and stand-alone (SA).

For example, assume a case where a macro cell to use a licensed band (for example, the 800 MHz band), a small cell to use a licensed band (for example, the 3. 5 GHz band) and a small cell to use an unlicensed band (for example, the 5 GHz band) are provided. Note that cells that employ CA are arranged so that their coverage areas overlap each other at least in part. Also, the coverage area of a Wi-Fi system is arranged to overlap part of the coverage areas of the macro cell and/or the small cells.

In this case, a scenario to apply CA or DC among the macro cell to use the licensed band (licensed macro cell), the small cell to use the licensed band (licensed small cell) and the small cell to use the unlicensed band (unlicensed small cell) may be possible. For example, CA may be applied assuming that the macro cell to use the licensed band is the primary cell (PCell), and the small cell to use the licensed band and the small cell to use the unlicensed band are secondary cells (SCells).

Also, a scenario to apply CA between the small cell to use the licensed band and the small cell to use the unlicensed band may be possible. Alternatively, a scenario to apply CA or DC between the macro cell to use the licensed band and the small cell to use the unlicensed band may be possible.

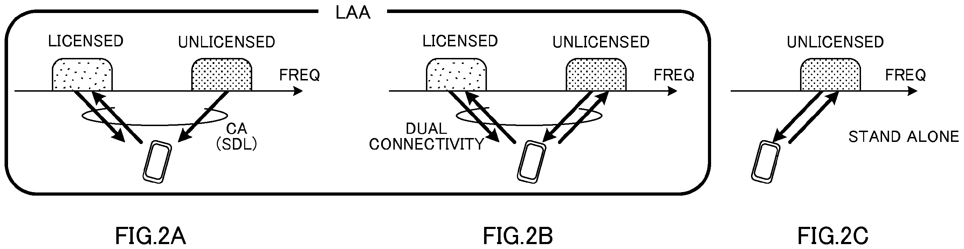

Now, each scenario will be described below with reference to FIGs. 2. FIGs. 2 provide diagrams to show examples of scenarios of using LTE/LTE-A in an unlicensed band. Note that the application of the present invention is not limited to the scenarios shown in FIGs. 2.

FIG. 2A shows a mode of operation to employ carrier aggregation (CA) by using a licensed band and an unlicensed band. Also, FIG. 2B shows a mode of operation to employ dual connectivity (DC) by using a licensed band and an unlicensed band. Furthermore, FIG. 2C shows a mode of operation to employ stand-alone (SA) by using a licensed band. Note that a radio base station to run LTE in an unlicensed band may be referred to as an "LTE-U base station," "LAA base station," and so on.

As shown in FIG. 2A, CA refers to bundling a plurality of component carriers (also referred to as "CCs," "carriers," "cells," etc.) into a wide band. Each CC has, for example, a maximum 20 MHz bandwidth, so that, when maximum five CCs are bundled, a wide band of maximum 100 MHz is provided.

When CA is employed, one radio base station's scheduler controls the scheduling of a plurality of CCs. Based on this, CA may be referred to as "intra-base station CA" (intra-eNB CA). Furthermore, as shown in FIG. 2A, it is possible to use an unlicensed band as a supplemental downlink (SDL) (without configuring a UL carrier). The supplemental downlink here refers to a carrier (band) that is used exclusively for DL communication.

Note that, according to the present embodiment, a (co-located) structure may be employed in which a licensed band and an unlicensed band are transmitted and received via one transmitting/receiving point (for example, a radio base station). In this case, the transmitting/receiving point (for example, an LTE-U base station) can communicate with user terminals by using both the licensed band and the unlicensed band. Alternatively, it is equally possible to employ a (non-co-located) structure in which a licensed band and an unlicensed band are transmitted and received via different transmitting/receiving points (for example, one via a radio base station and the other one via an RRH (Remote Radio Head) that is connected with the radio base station).

Dual connectivity (DC), which is shown in FIG. 2B, is the same as CA in bundling a plurality of CCs into a wide band. When DC is employed, a plurality of schedulers are provided independently, and these multiple schedulers each control the scheduling of one or more cells (CCs) they have control over. Based on this, DC may be referred to as "inter-base station CA" (inter-eNB CA). For example, in DC, DL signals to use a licensed band and an unlicensed band are transmitted from varying transmission points (for example, from varying radio base stations). Note that, in dual connectivity, carrier aggregation (intra-eNB CA) may be employed per individual scheduler (that is, radio base station) that is provided.

In stand-alone, which is shown in FIG. 2C, a cell (LTE-U base station) that runs LTE by using an unlicensed band operates alone. Stand-alone here means that communication with user terminals is possible without employing CA or DC. In this case, a user terminal can make an initial connection with the LTE-U base station. Consequently, in the operation mode of stand-alone, a scenario to allow non-operators (for example, individuals) to set up LTE-U base stations (access points) may be possible.

Also, in the operation modes of CA/DC shown in FIG. 2A and FIG. 2B, for example, the licensed band CC can be used as the primary cell (PCell) and the unlicensed band CC can be used as a secondary cell (SCell). Here, the primary cell (PCell) refers to the cell that manages RRC connection, handover and so on when CA/DC is used, and is also a cell that requires UL communication in order to receive data and feedback signals from terminals. The primary cell is always configured in the uplink and the downlink. A secondary cell (SCell) refers to a different cell that is configured apart from the primary cell when CA/DC is employed. A secondary cell may be configured in the downlink alone, or may be configured in both the uplink and the downlink at the same time.

Note that, as shown in above FIG. 2A (CA) and FIG. 2B (DC), a mode to presume the presence of licensed-band LTE (licensed LTE) when running LTE-U is referred to as "LAA" (Licensed-Assisted Access) or "LAA-LTE." In LAA, licensed band LTE and unlicensed band LTE are coordinated to allow communication with user terminals. Note that a base station in LAA is also referred to as an "LAA base station."

Furthermore, LAA may be structured so that a transmission point (for example, a radio base station) to use a licensed band and a transmission point to use an unlicensed band are, when being a distance apart, connected via a backhaul link (for example, optical fiber, the X2 interface and so on).

Now, the premise of existing LTE/LTE-A is that it is run in licensed bands, and therefore each operator is allocated a different frequency band. However, unlike a licensed band, an unlicensed band is not limited to use by a specific provider. Consequently, the frequency band used in one operator's LTE-U may overlap the frequency band used in another operator's LTE-U or in other systems such as Wi-Fi, and this has a threat of producing cross-interference.

In Wi-Fi systems that are run in unlicensed bands, carrier sense multiple access/collision avoidance (CSMA/CA), which is based on the mechanism of LBT (Listen Before Talk), is employed. To be more specific, for example, a method is used, in which each transmission point (also referred to as "TP," "AP," and so on) performs "listening" (CCA: Clear Channel Assessment) before carrying out transmission and carries out DL transmission only when there is no signal beyond a predetermined level. For example, when received power to exceed a predetermined threshold is measured in LBT, the channel is judged to be in a busy state (LBT_busy), and transmission is not carried out. On the other hand, if the received power measured in LBT is equal to or lower than a predetermined threshold, the channel is judged to be in a clear state (LBT_idle), and transmission is carried out.

Now, for LTE/LTE-A that is run in an unlicensed band (for example, LTE-U, LAA and so on), too, a study is in progress to reduce the cross-interference between transmission points by using transmission control that adopts LBT, as in Wi-Fi systems. For example, a radio base station (LAA base station) performs LBT before transmitting a signal in an unlicensed band, and applies transmission control based on the result of this LBT. The transmission control may include making a transition to another carrier by way of DFS (Dynamic Frequency Selection), applying transmission power control (TPC), or holding (stopping) transmission.

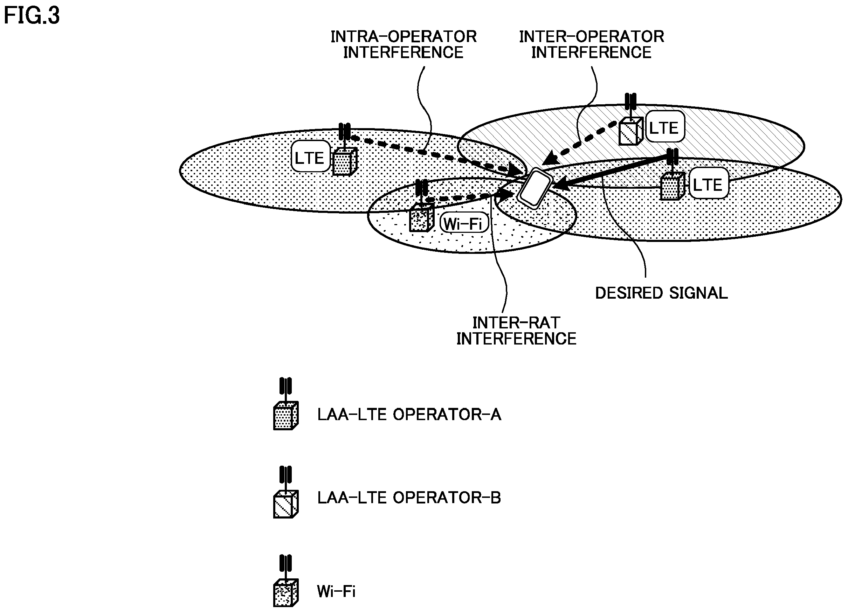

Furthermore, future systems are even presumed to run small cells by using a TDD band (for example, 3.5 GHz), apart from small cells that are run in an FDD band. Consequently, with LTE-U (including LAA), there is even an presumption to run transmission points synchronously in order to reduce the cross-interference with other transmission points (APs, TPs, etc.). For example, it may be possible to reduce interference by using intra-operator synchronization (which is employed, for example, in FDD and/or TDD) and inter-operator synchronization (which is employed, for example, in TDD), in addition to asynchronous operations of transmission points (see FIG. 3).

Scenarios of synchronization may include the case of assuming asynchronization both within an operator and between operators (scenario 1), the case of assuming synchronization within an operator and assuming asynchronization between operators (scenario 2), and the case of assuming synchronization both within an operator and between operators (scenario 3). Note that these scenarios all assume asynchronization between RATs (Radio Access Technologies).

In this way, by employing LBT in LTE/LTE-A (for example, LAA) that is run in an unlicensed band, it becomes possible to reduce the interference with other systems, other operators and so on. However, when a radio base station (LAA base station, LTE-U base station and so on) performs transmission control in an unlicensed band based on LBT results, there is a threat of limiting the opportunities to transmit signals to user terminals significantly, depending on the result of LBT, which might lead to a decrease of throughput.

So, the present inventors have focused on the interference cancelation process that is executed on the user terminal side, and come up with the idea of reducing the decrease of throughput by allowing a radio base station to control DL signal transmissions in an unlicensed band by taking into consideration this interference cancelation on the user terminal side. Now, a transmission method (transmission control based on LBT results) in a radio base station, which takes into consideration the interference cancelation process in user terminals, will be described.

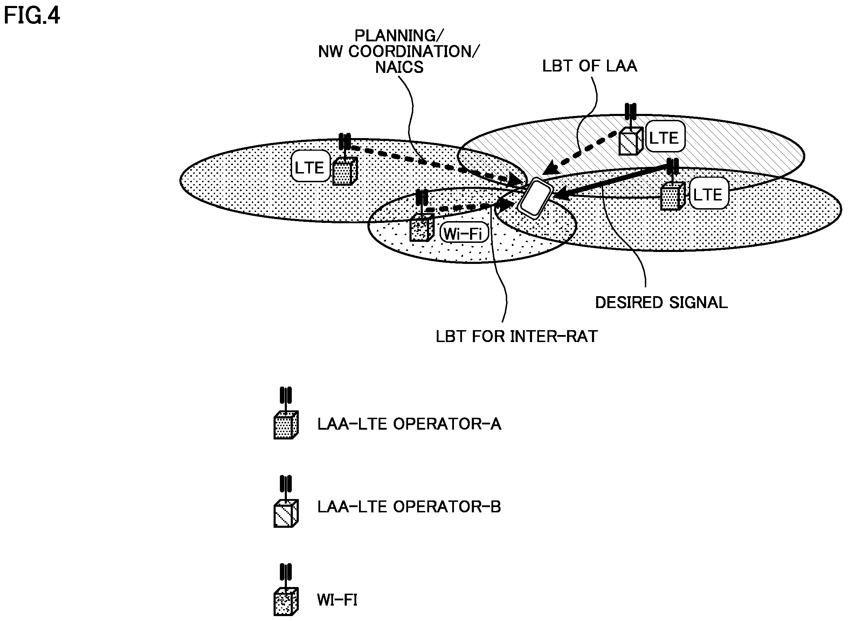

First, as an example, a method in which a radio base station controls transmission based on LBT results in intra-operator synchronization (scenario 2) will be described (see FIG. 4). FIG. 4 shows a case in which a user terminal connects with a first transmission point (for example, an LAA base station) that is run by an operator A. Also, a case is shown here in which a second transmission point run by the same operator A, a transmission point run by a different operator B and a transmission point of a different system (here, Wi-Fi) are provided around the first transmission point. Note that the case here assumes that the RATs in the unlicensed band (for example, LTE/LTE-A and Wi-Fi) are asynchronous.

Referring to scenario 2, given that it is difficult to demodulate or report information mutually over RATs, and that the locations of installation are difficult to control, the first LAA base station applies power detection-based LBT to the signals of the different system. Also, the first LAA base station, having a threat of interfering with the other operator's LAA base station (a second LAA base station) that is run asynchronously, applies LBT to the other operators' signals as well. Note that, since the signals transmitted from the other operator have the same signal configurations, by using correlation detection, it is possible to detect signals having low transmission power in comparison to the signals of the other system.

Meanwhile, within the same operator, it is possible to reduce interference by employing operator-dependent operations (the location of installation, tilt control and so on) and interference coordination based upon coordination between LAA base stations (ICIC (Inter-Cell Interference Coordination), CoMP (Coordinated Multi Point) and so on). Also, a user terminal can perform the interference cancelation process by presuming that transmission points under the same operator (here, the first LAA base station and the second LAA base station) are synchronous. For example, for the interference cancelation process, the user terminal can use a receiver that employs NAICS (Network Assisted Interference Cancellation and Suppression).

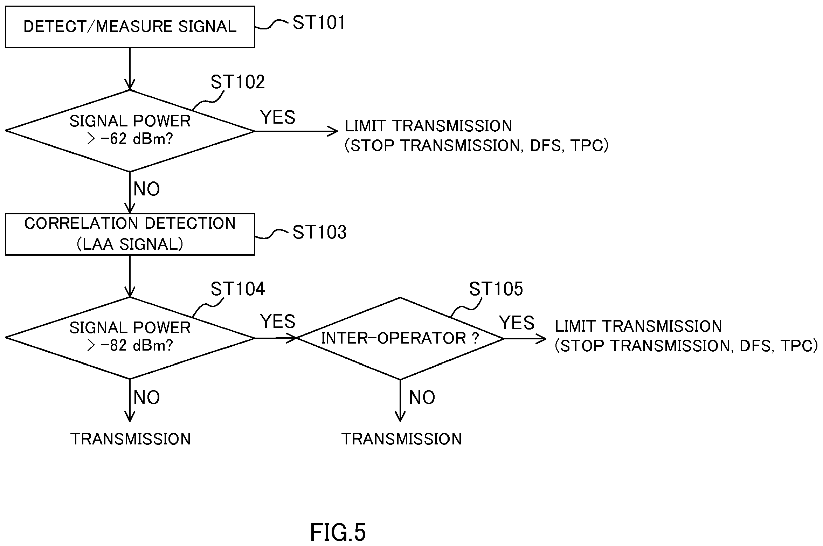

FIG. 5 shows an example of a transmission method to use LBT in an LAA base station (here, the first LAA base station) according to scenario 2. Note that, although FIG. 5 shows a case where, as LBT to be employed in the LAA base station, LBT is carried out by configuring different power thresholds for signals transmitted from other systems and signals transmitted from the same system, the present embodiment is by no means limited to this. Also, the signal power thresholds are not limited to the values shown in FIG. 5 either.

First, the first LAA base station detects/measures the signals transmitted from other transmission points in a predetermined timing (for example, before transmitting a signal) (ST101). When the detected signals show greater power than a predetermined value (here, -62 dBm) (ST102: Yes), the first LAA base station judges that interference signals are present, and limits transmissions. For example, the first LAA base station stops signal transmissions, or applies DFS or transmission power control. On the other hand, when the detected signals show power that is equal to lower than a predetermined value (here, -62 dBm) (ST102: No), the first LAA base station judges that no interference signal is present.

Furthermore, the first LAA base station performs correlation detection with respect to the signals of the same system (here, LTE/LTE-A)

(ST103). When signals that are detected show power that is equal to or lower than a predetermined value (here, -82 dBm) (ST104: No), the first LAA base station judges that no interference signal is present in the same system, and carries out transmission. On the other hand, when the detected signals show greater power than a predetermined value (here, -82 dBm) (ST104: Yes), the first LAA base station judges that interference signals are present.

Next, the first LAA base station judges whether or not the interference signals are signals from different operators (inter-operator) (ST105). When the interference signals are signals of different operators (for example, operator B) (ST105: Yes), the first LAA base station limits transmissions. On the other hand, when the interference signals are not signals from different operators (ST105: No) -- that is, when the interference signals are signals of the same operator (for example, signals from the second LAA base station) -- the first LAA base station judges that the user terminal side is capable of an interference cancelation process and so on, and transmits signals. Note that, in ST105, the first LAA base station may judge whether or not the interference signals are synchronized.

In this way, when LBT is employed, a radio base station (LAA base station, LTE-U base station and so on) does not immediately limit transmissions even when judging that interference signals are present, and controls transmission by taking into consideration the interference cancelation process on the user terminal side. By this means, in comparison to the case where the interference cancelation process on the user terminal side is not taken into consideration (where transmissions are limited when "Yes" is yielded in ST104), it becomes possible to increase the opportunities of transmission to user terminals.

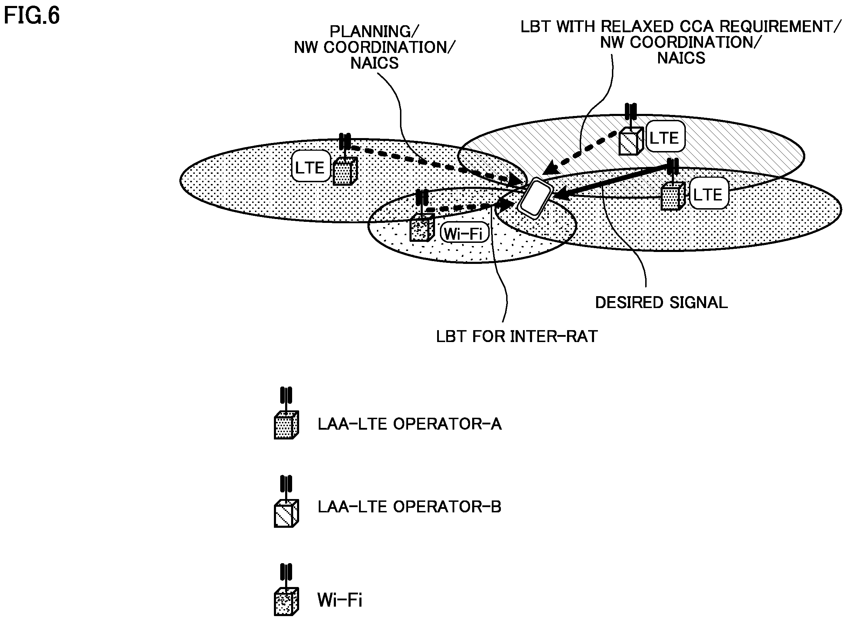

Next, for another example, a method in which a radio base station controls transmission based on LBT results in intra-operator synchronization and inter-operator synchronization (scenario 3) will be described (see FIG. 6). FIG. 6 shows a case where a user terminal connects with a first transmission point (for example, an LAA base station) that is run by an operator A. Also, a case is shown here in which a second transmission point run by the same operator A, a transmission point run by a different operator B and a transmission point of a different system (here, Wi-Fi) are provided around the first transmission point. Note that the case here assumes that the RATs in the unlicensed band (for example, LTE/LTE-A and Wi-Fi) are asynchronous.

Referring to scenario 3, given that it is difficult to demodulate or report information mutually over RATs, and that the locations of installation are difficult to control, the first LAA base station applies power detection-based LBT to the signals of the different system.

Meanwhile, within the same operator, it is possible to reduce interference by employing operator-dependent operations (the location of installation, tilt control and so on) and interference coordination based upon coordination between LAA base stations (ICIC, CoMP and so on). Also, a user terminal can perform the interference cancelation process by presuming that transmission points under the same operator (here, the first LAA base station and the second LAA base station) are synchronous. For example, for the interference cancelation process, the user terminal can use a receiver that allows a more sophisticated interference cancelation process by using NAICS (Network Assisted Interference Cancellation and Suppression).

Also, according to scenario 3, operators (for example, operator A and operator B) are also run synchronously. Consequently, a user terminal can perform the interference cancelation process with respect to signals from other operators, as with signals from the same operator, by presuming inter-operator synchronization.

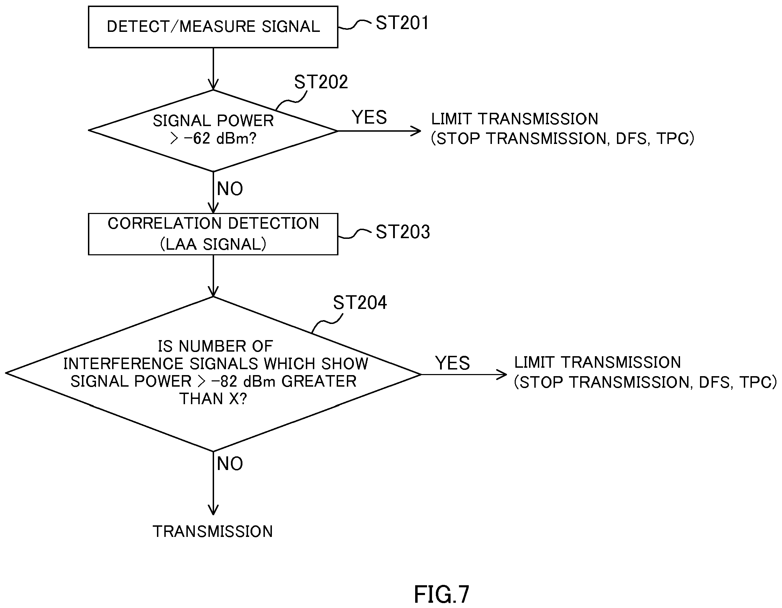

FIG. 7 shows an example of a transmission method to use LBT in an LAA base station (here, the first LAA base station) in accordance with scenario 3. Note that, although FIG. 7 shows a case where, as LBT to be employed in the LAA base station, LBT is carried out by configuring different power thresholds for signals transmitted from other systems and signals transmitted from the same system, the present embodiment is by no means limited to this. Also, the signal power thresholds are by no means limited to the values shown in FIG. 7.

First, the first LAA base station detects/measures the signals transmitted from other transmission points in a predetermined timing (for example, before transmitting a signal) (ST201). When the detected signals show greater power than a predetermined value (here, -62 dBm) (ST102: Yes), the first LAA base station judges that interference signals are present, and limits transmissions. For example, the first LAA base station stops signal transmissions, or applies DFS or transmission power control. On the other hand, when the detected signals show power that is equal to lower than a predetermined value (here, -62 dBm) (ST202: No), the first LAA base station judges that no interference signal is present.

Furthermore, the first LAA base station performs correlation detection with respect to the signals of the same system (here, LTE/LTE-A) (ST203). The first LAA base station performs transmission control based on the number of signals showing greater received power than a predetermined value (here, -82 dBm) among the detected interference signals.

For example, when the number of signals having higher signal power than a predetermined value is greater than a predetermined number (X) (ST204: Yes), the first LAA base station judges that there are many interference signals, and limits signal transmissions. Note that the predetermined number (X) can be determined based on the user terminal's capability for the interference cancelation process, and may be reported from the user terminal side to the radio base station, or may be determined in advance. That is, when the number of signals to be interference signals is greater than a predetermined value, the first LAA base station judges that the cancelation process is not possible on the user terminal side, and limits transmissions.

On the other hand, when the number of signals having higher signal power than a predetermined value is equal to or less than a predetermined number (X) (ST204: No), the first LAA base station judges that the user terminal side is capable of the cancelation process and so on, and transmits signals.

In this way, when LBT is employed, a radio base station (LAA base station, LTE-U base station and so on) does not immediately limit transmissions even when judging that interference signals are present, and controls transmission by taking into consideration the interference cancelation process on the user terminal side. By this means, in comparison to the case where the interference cancelation process on the user terminal side is not taken into consideration, it becomes possible to increase the opportunities of transmission to user terminals. As a result of this, throughput can be improved.

Also, when a user terminal performs the interference cancelation process with respect to signals from other transmission points (other transmission points under the same operator, other transmission points under other operators, and so on), it is preferable to know the sequences (scrambling sequence and so on) of the signals transmitted from each signal point. So, the present inventors have focused on the format (LAA transmission format) of signals allocated in an unlicensed band, and come up with the idea of linking predetermined signals with transmission point identification numbers (TP-IDs) and/or operator identification numbers (OP-IDs).

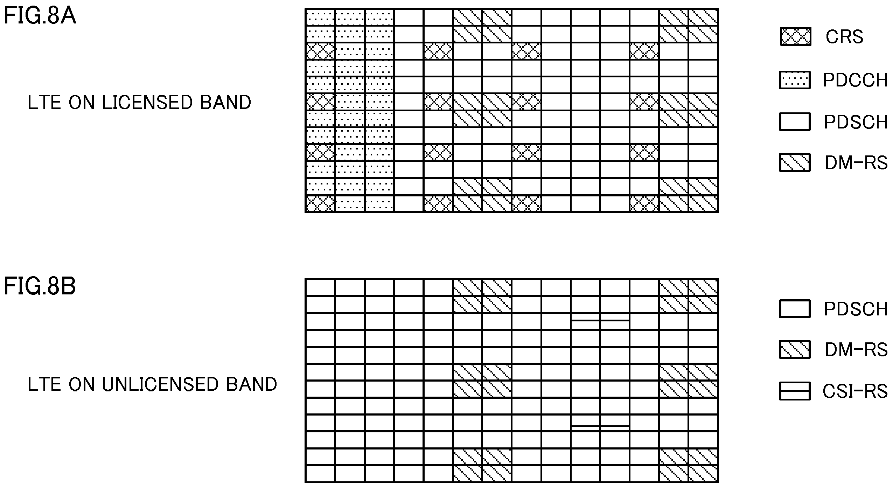

First, an example of a transmission format in an unlicensed band (LAA) will be described. FIG. 8A shows an example of allocation of LTE/LTE-A DL signals in a licensed band. Also, FIG. 8B shows an example of allocation of LTE/LTE-A (LAA) DL signals in an unlicensed band.

In the licensed band, a cell-specific reference signal (CRS: Cell-specific Reference Signal), a control channel (PDCCH (Physical Downlink Control CHannel)/EPDCCH (Enhanced PDCCH) and so on), a data channel (PDSCH), a reference signal for data channel demodulation (DM-RS: Demodulation Reference Signal), a CSI-RS and so on are allocated to radio resources. FIG. 8A shows a case where the PDCCH, the CRS, the PDSCH and the DM-RS are allocated.

Meanwhile, in the unlicensed band (LAA), the control channel (PDCCH/EPDCCH and so on) may be transmitted via the licensed band. For example, the LAA base station reports DCI (UL grants and/or DL assignments) to the user terminal by way of cross carrier scheduling via the licensed band. That is, it is possible to make the downlink control channel unnecessary in the unlicensed band.

Also, in the unlicensed band, the signal to be used in cell discovery/detection (DS: Discovery Signal) is transmitted in a long cycle. Also, a channel state measurement reference signal (CSI-RS) may be transmitted in a predetermined cycle as well. Meanwhile, since, in the unlicensed band, tracking and/or the like can be carried out by using the DS and the CSI-RS, a mode which does not transmit part or all of the CRSs may be presumed as well.

Furthermore, in the unlicensed band, data signals (PDSCH signals) are transmitted. Consequently, reference signals (DM-RSs) for demodulating the data signals are also allocated FIG. 8B shows a case where the PDSCH, the DM-RS and the CSI-RS are allocated.

Taking the above-described LAA format into consideration, the present inventors have found out that it is necessary to know at least the demodulation reference signals transmitted from other transmission points, for the interference cancelation process (NAICS) in an unlicensed band by user terminals. Meanwhile, the present inventors have also found out that, in the unlicensed band, signals such as the PDCCH/EPDCCH, the PCFICH, the PHICH, the CRS and so on have little impact even if they are not taken into consideration upon the interference cancelation process.

So, the present embodiment applies control so that, in an unlicensed band, a user terminal learns the sequences (scrambling sequences) of reference signals (DM-RSs) for PDSCH demodulation, transmitted from other transmission points, and performs the interference cancelation process (NAICS). Also, according to the present embodiment, the sequences of demodulation reference signals are linked with (generated in association with) transmission point identification numbers (TP-IDs). Alternatively, the sequences of demodulation reference signals are linked with transmission point identification numbers (TP-IDs) and operator identification numbers (OP-IDs).

By this means, the blind detection in user terminals can be simplified in comparison to the case of linking demodulation reference signals with user-specific identification numbers (UE IDs). Also, even when an LBT result is not good, an LAA base station can still carry out transmission by taking into consideration the interference cancelation process in user terminals, so that it is possible to reduce the decrease of throughput. Note that, in a licensed band, PDSCH demodulation reference signals are linked with user-specific identification numbers and generated.

Also, an LAA base station or a user terminal, by receiving and demodulating signals that are linked with transmission point identification numbers and/or operator identification numbers and transmitted from other transmission points, such as DSs, beacons, broadcast signals and so on, can learn the transmission point identification numbers and/or the operator identification numbers of received signals.

The DS (Discovery Signal) is a signal that is transmitted in order to detect cells and/or transmission points (for example, small cells), and can be formed with a cell-specific or transmission point-specific reference signal. For example, the DS can be formed with a combination of conventional reference signals (combination of a synchronization signal and a CRS, and so on). Also, the beacon (BRS: Beacon Reference Signal) is a signal that is transmitted depending on the result of LBT (for example, LBT_idle), and can be formed with a cell-specific or transmission point-specific reference signal. For example, a conventional reference signal can be seen as a BRS candidate.

Note that, according to the present embodiment, it is preferable if the user terminal can at least learn the sequences of demodulation reference signals (DM-RSs) transmitted from other transmission points, but this is by no means limiting. Besides this, the user terminal may learn the configurations of CSI-RSs (CSI-RS configuration) and perform the interference cancelation process.

For example, when a CSI-RS is linked with a transmission point identification number and/or an operator identification number, an LAA base station or a user terminal can learn the CSI-RS configuration from this identification number. Nevertheless, if the CSI-RS is transmitted not so frequently, the user terminal may perform the interference cancelation process (use a NAICS receiver) without learning the CSI-RS configuration, and this is likely to have little impact. Also, the user terminal may be structured to report capability information (capability) as to whether or not the user terminal has a capability for the interference cancelation process, to the radio base station in advance.

Possible methods of allowing a user terminal to learn the transmission point identification numbers and operator identification numbers of signals (for example, demodulation reference signals) transmitted from other transmission points include reporting these from an LAA base station, or making the user terminal acquire these on its own. Now, methods will be described below, in which a user terminal acquires transmission point identification numbers and/or operator IDs and performs the interference cancelation process. Note that, although cases will be illustrated with the following description in which a user terminal performs the interference cancelation process by taking into consideration the demodulation reference signals, the present embodiment is by no means limited to this.

### (First Example)

A case will be described with a first example where information about the demodulation reference signal is reported from a transmission point (also referred to as an "LAA TP," "LAA AP," "LAA base station," "LTE-U base station" and so on) to a user terminal.

First, the LAA base station detects/measures signals from other transmission points by using LBT in a predetermined timing (for example, before transmitting a signal). When signals from other transmission points are detected, the LAA base station demodulates these signals and acquires information about these other transmission points (the transmission point identification numbers, the operator identification numbers and so on). For example, the LAA base station has a receiver which can demodulate information about other transmission points (the transmission point identification numbers and/or the operator identification numbers) based on at least one of the cell detection signals (DS), the beacons and the broadcast signals transmitted from these other transmission points (LAA base stations).

The LAA base station reports the information about other transmission points acquired in this way to a user terminal. At this time, the LAA base station can report information about the transmission points to the user terminal by using a licensed band. By using a licensed band, the report can be sent to the use terminal reliably.

The user terminal performs the cancelation process based on the information about the transmission points reported from the LAA base station. To be more specific, the user terminal performs blind detection with respect to an ID set that is reported from the LAA base station, and applies interference cancelation (NAICS). The ID set may be a combination of the identification numbers of a plurality of transmission points, or may be a combination of transmission point and operator identification numbers.

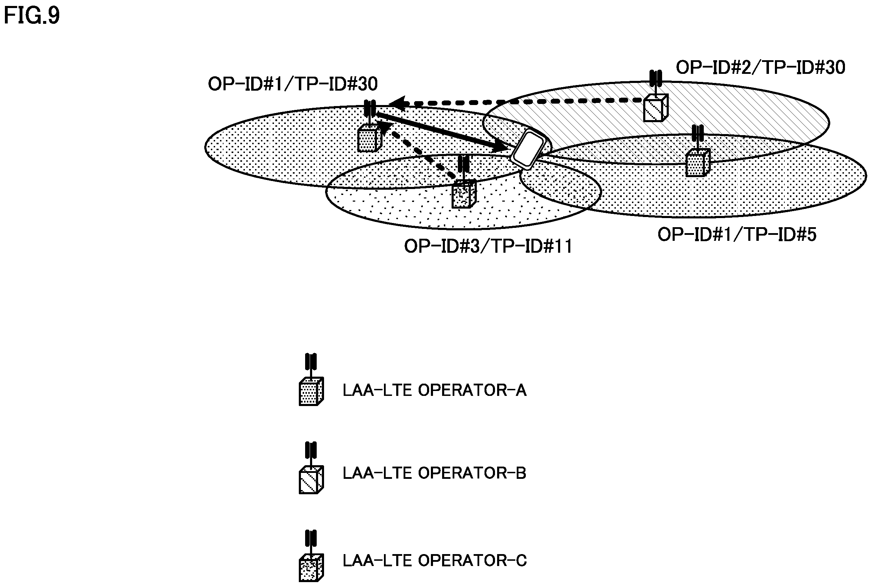

Here, for one example, a case will be assumed in which a plurality of operators that each run LTE/LTE-A in an unlicensed band form mutually neighboring transmission points, as shown in FIG. 9. In FIG. 9, two transmission points (transmission point identification number (TP-ID) #30 and #5) formed by the first operator (operator identification number (OP-ID) #1), one transmission point (TP-ID #30) formed by a second operator (OP-ID #2), and one transmission point (TP-ID #11) formed by a third operator (OP-ID #3) neighbor each other. Also, a case is shown here in which the user terminal connects with the first operator (OP-ID #1/TP-ID #30).

Each transmission point at least transmits data signals and reference signals in an unlicensed band. Also, each transmission point controls the transmissions of data signals and/or others based on the result of LBT in the unlicensed band. Note that the reference signals may include a demodulation reference signal (DM-RS) for demodulating data signals.

Next, an example of the interference cancelation process method in a user terminal connected with a predetermined LAA base station (here, OP-ID #1/TP-ID #30) will be described.

First, the LAA base station detects/measures (sensing) signals transmitted from other transmission points by using LBT. When signals from other transmission points are detected, the LAA base station acquires information about the transmission points having transmitted the detected signals (for example, the transmission point identification numbers (TP-IDs) and/or the operator identification numbers (OP-ID) and so on).

The LAA base station receives and demodulates the signals linked with the operator IDs of the cell detection/discovery signals (DSs), beacons, broadcast signals and so on transmitted from nearby transmission points.

The LAA base station having acquired information about other transmission points reports the information about these other transmission points to the user terminal. Note that the report to the user terminal can be sent via a licensed band. By using a licensed band, reliable transmission is made possible regardless of the result of LBT in an unlicensed band.

Also, the LAA base station may be structured to select a predetermined identification number from the information about other detected transmission points, and report this to the user terminal. For example, the LAA base station may be structured to select, from among the identification numbers of other transmission points that are detected by using LBT, only those transmission point identification numbers and operator identification numbers where power that is equal to or greater than a predetermined value is detected, and report these to the user terminal.

Alternatively, the LAA base station may be structured to report in advance information about other transmission points that are detected, to the user terminal, and, later, report information about the transmission points that are actually detected (for example, a combination of operator identification numbers and transmission point identification numbers) to the user terminal, in a dynamic fashion. In this case, the LAA base station can report (configure) information about a plurality of transmission points that are detected by means of LBT, to the user terminal, through higher layer signaling (for example, RRC signaling, broadcast signals and so on).

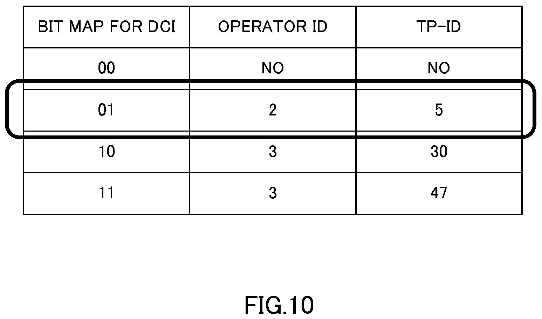

FIG. 10 shows a case where information about three transmission points that are detected by LBT is configured in the user terminal. If other transmission points are detected in later LBT, the LAA base station sends a report to the user terminal dynamically, by using, for example, downlink control information (DCI). FIG. 10 shows a case where information (01) about the transmission point that is detected by LBT as the strongest source of interference (where the highest power is detected) is reported in DCI. Note that the report to the user terminal can be sent using a licensed band.

In this way, the LAA base station selects and reports information about other detected transmission points to the user terminal, so that it is possible to reduce the signals which the user terminal has to take into consideration upon the interference cancelation process, and, consequently, the load of the interference cancelation process can be lightened.

Also, since the LAA base station reports information about other transmission points that are detected by LBT as information for the interference cancelation process om the user terminal side, the LAA base station can control the transmission of DL signals by taking into consideration not only the result of LBT, but also the interference cancelation process on the user terminal side. By this means, even when LBT is used, it is possible to increase the opportunities of transmissions to the user terminal, so that it is possible to reduce the decrease of throughput.

### (Second Example)

A case will be described with a second example where a user terminal acquires information about nearby transmission points (for example, transmission points where the user terminal is not connected, other operators' transmission points and so on) based on signals received from other transmission points.

To be more specific, the user terminal can acquire transmission point identification numbers, operator identification numbers and so on by performing receiving operations (detection, demodulation process and so on) in the receiving periods for predetermined signals transmitted from nearby transmission points (for example, DSs, beacons, broadcast signals and so on). Then, the user terminal performs the interference canceller process based on the information acquired with respect to other transmission points. That is to say, according to the second example, the user terminal can use an interference canceller autonomously.

In this way, by acquiring information about other transmission points and using this information as information for the interference cancelation process on the user terminal side, the LAA base station can control the transmission of DL signals by taking into account not only the result of LBT, but also the interference cancelation process on the user terminal side. By this means, even when LBT is used, it is possible to increase the opportunities of transmissions to the user terminal, so that it is possible to reduce the decrease of throughput.

Note that when different operators are synchronized and these synchronized operators share a common identification number, the LAA base station may report the operator identification number to the user terminal in advance. In this case, the LAA base station can report the operator identification number by using a licensed band.

### (Third Example)

The method of configuring transmission point identification numbers and/or operator identification numbers in the LAA base station will be described with a third example.

According to the present embodiment, a structure may be used in which operator IDs are determined in advance between different operators (providers). For example, operator ID #1 is assigned to an operator A, operator ID #2 is assigned to an operator B and operator ID #3 is assigned to an operator C. In this case, for the identification numbers of transmission points, common numbers may be used between the operators.

For example, when individual transmission points are managed by operators to which operator identification number are assigned in advance, a common TP-ID set (for example, TP-ID #10 to #20 and so on) can be configured between different operators.

Alternatively, as shown earlier with the second example, a user terminal reports the transmission point identification numbers and/or the operator identification numbers that are detected from the DSs, beacons, broadcast signals and so on that are received, to the LAA base station. Then, the LAA base station may be structured to receive the report and configure the transmission point identification numbers autonomously.

By this means, the LAA base station can configure its transmission point identification numbers not to overlap those of other transmission points based on the identification information of nearby transmission points reported from the user terminal. Note that the report from the user terminal can be sent via a licensed band. Also, the transmission point identification numbers can be configured with virtual numbers (virtual transmission point identification numbers).

### (Structure of Radio Communication System)

Now, the structure of the radio communication system according to the present embodiment will be described below.

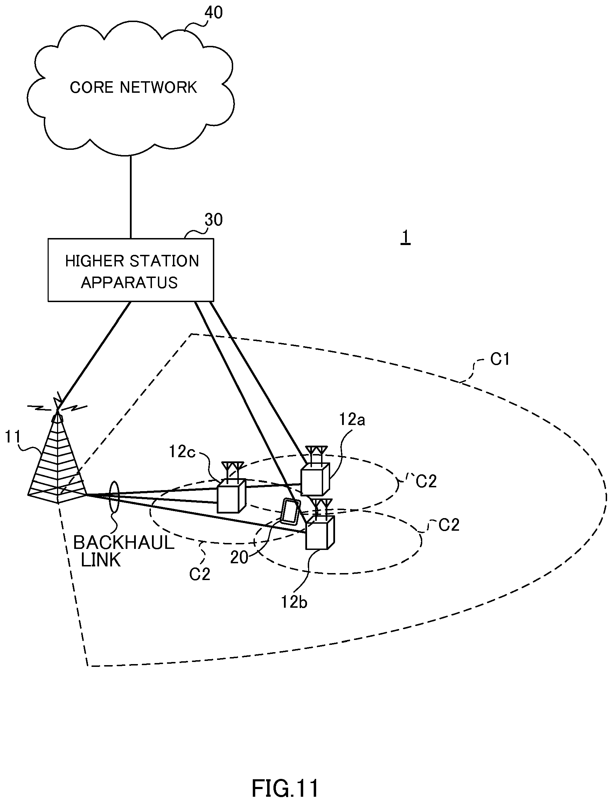

FIG. 11 is a diagram to show a schematic structure of the radio communication system according to the present embodiment. Note that the radio communication system shown in FIG. 11 is, for example, an LTE system or a system to incorporate SUPER 3G. This radio communication system can adopt carrier aggregation (CA) and/or dual connectivity (DC) to group a plurality of fundamental frequency blocks (component carriers) into one, where the LTE system bandwidth constitutes one unit. Also, the radio communication system shown in FIG. 11 has a radio base station (LTE-U base station, LAA base station, LAA AP, LAA TP and so on) that uses an unlicensed band. Note that this radio communication system may be referred to as "IMT-advanced," or may be referred to as "4G," "FRA (Future Radio Access)," etc.

The radio communication system 1 shown in FIG. 11 includes a radio base station 11 that forms a macro cell C1, and radio base station s 12a to 12c that form small cells C2, which are placed within the macro cell C1 and which are narrower than the macro cell C1. Also, user terminals 20 are placed in the macro cell C1 and in each small cell C2. For example, a structure may be employed here in which the macro cell C1 is used in a licensed band and the small cells C2 are used in an unlicensed band (for example, LAA). Also, a structure to use part of the small cells in a licensed band and use the other small cells in an unlicensed band may be possible.

The user terminals 20 can connect with both the radio base station 11 and the radio base stations 12. The user terminals 20 may use the macro cell C1 and the small cells C2, which use different frequencies, at the same time, by means of CA or DC. For example, it is possible to transmit assist information (DL signal configurations) pertaining to a radio base station 12 that use an unlicensed band (for example, an LTE-U base stations), from the radio base station 11 using a licensed band to the user terminals 20. Also, a structure may also be employed in which, when CA is executed between the licensed band and the unlicensed band, one radio base station (for example, the radio base station 11) controls the scheduling of the licensed band cells and the unlicensed band cells.

Between the user terminals 20 and the radio base station 11, communication is carried out using a carrier of a relatively low frequency band (for example, 2 GHz) and a narrow bandwidth (referred to as, for example, "existing carrier, " "legacy carrier" and so on). Meanwhile, between the user terminals 20 and the radio base stations 12, a carrier of a relatively high frequency band (for example, 3.5 GHz and so on) and a wide bandwidth may be used, or the same carrier as that used in the radio base station 11 may be used. Between the radio base station 11 and the radio base station s 12 (or between the radio base stations 12), wire connection (optical fiber, the X2 interface and so on) or wireless connection can be established.

The radio base station 11 and the radio base stations 12 are each connected with a higher station apparatus 30, and are connected with a core network 40 via the higher station apparatus 30. Note that the higher station apparatus 30 may be, for example, an access gateway apparatus, a radio network controller (RNC), a mobility management entity (MME) and so on, but is by no means limited to these. Also, each radio base station 12 may be connected with higher station apparatus 30 via the radio base station 11.

Note that the radio base station 11 is a radio base station having a relatively wide coverage, and may be referred to as an "eNodeB," a "macro base station," a "transmitting/receiving point" and so on. Also, the radio base stations 12 are radio base stations having local coverages, and may be referred to as "small base stations," "pico base stations," "femto base stations," "Home eNodeBs," "RRHs" (Remote Radio Heads), "micro base stations," "transmitting/receiving points" and so on. Hereinafter the radio base stations 11 and 12 will be collectively referred to as a "radio base station 10," unless specified otherwise. The user terminals 20 are terminals to support various communication schemes such as LTE, LTE-A and so on, and may be either mobile communication terminals or stationary communication terminals.

In the radio communication system, as radio access schemes, OFDMA (Orthogonal Frequency Division Multiple Access) is applied to the downlink, and SC-FDMA (Single-Carrier Frequency Division Multiple Access) is applied to the uplink. OFDMA is a multi-carrier communication scheme to perform communication by dividing a frequency band into a plurality of narrow frequency bands (subcarriers) and mapping data to each subcarrier. SC-FDMA is a single-carrier communication scheme to mitigate interference between terminals by dividing the system band into bands formed with one or continuous resource blocks per terminal, and allowing a plurality of terminals to use mutually different bands.

Now, communication channels used in the radio communication system shown in FIG. 11 will be described. Downlink communication channels include a PDSCH (Physical Downlink Shared CHannel), which is used by each user terminal 20 on a shared basis, and downlink L1/L2 control channels (PDCCH, PCFICH, PHICH and enhanced PDCCH). User data and higher control information are communicated by the PDSCH. Scheduling information for the PDSCH and the PUSCH and so on are communicated by the PDCCH (Physical Downlink Control CHannel). The number of OFDM symbols to use for the PDCCH is communicated by the PCFICH (Physical Control Format Indicator CHannel). HARQ ACKs/NACKs for the PUSCH are communicated by the PHICH (Physical Hybrid-ARQ Indicator CHannel). Also, the scheduling information for the PDSCH and the PUSCH and so on may be communicated by the enhanced PDCCH (EPDCCH) as well. This EPDCCH is frequency-division-multiplexed with the PDSCH (downlink shared data channel).

Uplink communication channels include a PUSCH (Physical Uplink Shared CHannel), which is used by each user terminal 20 on a shared basis as an uplink data channel, and a PUCCH (Physical Uplink Control CHannel), which is an uplink control channel. User data and higher control information are communicated by this PUSCH. Also, downlink radio quality information (CQI: Channel Quality Indicator), delivery acknowledgment signals (ACKs/NACKs) and so on are communicated by the PUCCH.

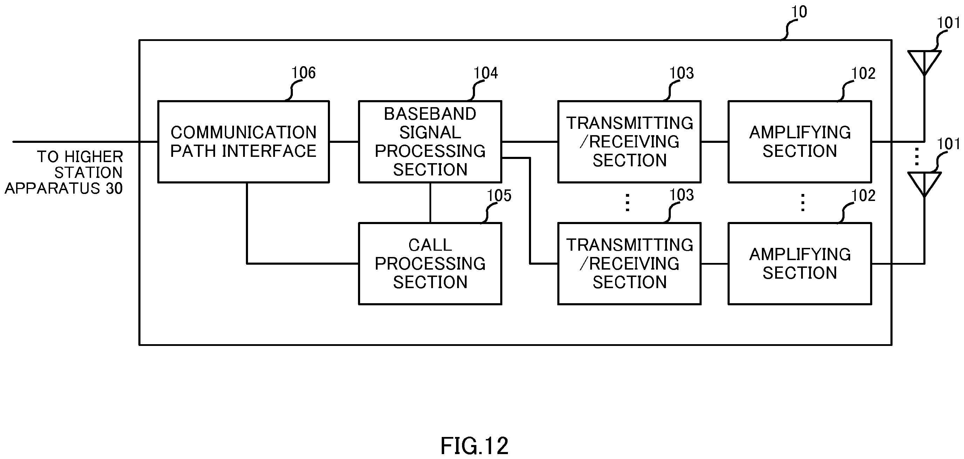

FIG. 12 is a diagram to show an overall structure of a radio base station 10 (which may be either a radio base station 11 or 12) according to the present embodiment. The radio base station 10 has a plurality of transmitting/receiving antennas 101 for MIMO communication, amplifying sections 102, transmitting/receiving sections 103 (transmitting sections/receiving sections), a baseband signal processing section 104, a call processing section 105 and a communication path interface 106.

User data to be transmitted from the radio base station 10 to a user terminal 20 on the downlink is input from the higher station apparatus 30 to the baseband signal processing section 104, via the communication path interface 106.

In the baseband signal processing section 104, a PDCP layer process, division and coupling of user data, RLC (Radio Link Control) layer transmission processes such as an RLC retransmission control transmission process, MAC (Medium Access Control) retransmission control, including, for example, an HARQ transmission process, scheduling, transport format selection, channel coding, an inverse fast Fourier transform (IFFT) process and a precoding process are performed, and the result is forwarded to each transmitting/receiving section 103. Furthermore, downlink control channel signals are also subjected to transmission processes such as channel coding and an inverse fast Fourier transform, and forwarded to each transmitting/receiving section 103.

Also, the baseband signal processing section 104 reports, to the user terminal 20, control information for allowing communication in the cell (system information), through higher layer signaling (for example, RRC signaling, broadcast signals and so on). The information for allowing communication in the cell includes, for example, the uplink or downlink system bandwidth and so on.

Also, information about other transmission points (for example, transmission point identification numbers, operator identification numbers and so on) can be transmitted from a radio base station (for example, the radio base station 11) to a user terminal by using a licensed band, via the transmitting/receiving sections 103.

Each transmitting/receiving section 103 converts the baseband signals, which are pre-coded and output from the baseband signal processing section 104 on a per antenna basis, into a radio frequency band. The amplifying sections 102 amplify the radio frequency signals having been subjected to frequency conversion, and transmit the signals through the transmitting/receiving antennas 101. Note that the transmitting/receiving sections (transmission sections/receiving sections) 103 can be formed with transmitters/receivers, transmitting/receiving circuits (transmitting circuits/receiving circuits) or transmitting/receiving devices (transmitting devices/receiving devices) that are used in the technical field to which the present invention pertains.

Meanwhile, as for data to be transmitted from the user terminals 20 to the radio base station 10 on the uplink, radio frequency signals that are received in the transmitting/receiving antennas 101 are each amplified in the amplifying sections 102, converted into the baseband signal through frequency conversion in each transmitting/receiving section 103, and input in the baseband signal processing section 104.

In the baseband signal processing section 104, the user data that is included in the input baseband signal is subjected to an FFT process, an IDFT process, error correction decoding, a MAC retransmission control receiving process, and RLC layer and PDCP layer receiving processes, and the result is forwarded to the higher station apparatus 30 via the communication path interface 106. The call processing section 105 performs call processing such as setting up and releasing communication channels, manages the state of the radio base stations 10 and manages the radio resources.

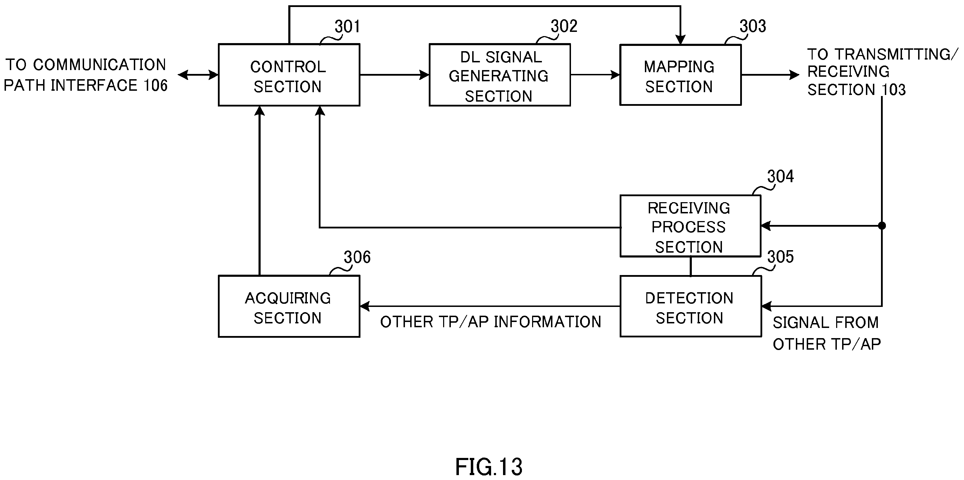

FIG. 13 is a diagram to show a principle functional structure of the baseband signal processing section 104 provided in the radio base station 10 according to the present embodiment. Note that, although FIG. 13 primarily shows functional blocks that pertain to characteristic parts of the present embodiment, the radio base station 10 has other functional blocks that are necessary for radio communication as well.

As shown in FIG. 13, the radio base station 10 has a control section (scheduler) 301, a DL signal generating section 302, a mapping section 303, a receiving process section 304, a detection section 305 and an acquiring section 306.

The control section 301 controls the scheduling of downlink data signals that are transmitted in the PDSCH, and downlink control signals that are communicated in the PDCCH and/or the enhanced PDCCH (EPDCCH). Also, the control section 301 controls the scheduling of system information, synchronization signals, downlink reference signals such as the CRS and the CSI-RS, and so on. Note that, when the licensed band and the unlicensed band are controlled with one control section (scheduler) 301, the control section 301 controls the transmission of DL signals that are transmitted in licensed band cells and unlicensed band cells.

The control section 301 at least controls the transmissions of data signals and demodulation reference signals for demodulating the data signals in the unlicensed band. Also, a structure may be employed here in which the sequences of the demodulation reference signals are linked with transmission point identification numbers and/or operator identification numbers. Obviously, it is also possible to transmit other signals such as CSI-RSs and so on. Note that the control section 301 can be formed with a controller, a scheduler, a control circuit or a control device that is used in the technical field to which the present invention pertains.

When the control section 301 controls the transmission in the unlicensed band, the control section 301 controls the transmission of DL signals in the unlicensed band based on the result of LBT (Listen Before Talk) executed in the unlicensed band. In this case, the result of LBT executed in the receiving process section is output to the control section 301. Also, the control section 301 controls the transmission of DL signals by taking into consideration not only the result of LBT, but also the interference cancelation process capability of user terminals. Whether or not a user terminal has an interference cancelation process capability can be judged based on a report from the user terminal (capability).

For example, assume a case here in which synchronous operations are carried out within an operator. In this case, even if interference signals are detected by LBT, the control section 301 can still judge that the interference cancelation process is possible in the user terminal and transmit DL signals, if these interference signals are ones transmitted from transmission points under the same operator.

Alternatively, assume a case where synchronous operations are carried out within an operator and between and operators. In this case, even if interference signals are detected by LBT, the control section 301 can still judge that the interference cancelation process is possible in the user terminal and transmit DL signals, if the number of interference signals is equal to less than a predetermined number.

The DL signal generating section 302 generates DL signals based on commands from the control section 301. DL signals in the unlicensed band might include the DL data signal, the demodulation reference signal, the channel state measurement reference signal, the DS, the beacon, the broadcast signal and so on. When reporting information about other transmission points (transmission point identification numbers, operator identification numbers and so on) to the user terminal, the DL signal generating section 302 includes information about the transmission points in the downlink control signals and/or higher layer signaling that are transmitted in the licensed band. Note that the DL signal generating section 302 can be formed with a signal generator or a signal generating circuit that is used in the technical field to which the present invention pertains.

The mapping section 303 controls the mapping of DL signals based on commands from the control section 301. Note that the mapping section 303 can be formed with a mapping circuit or a mapper that is used in the technical field to which the present invention pertains. The receiving process section 304 performs receiving processes (for example, decoding, demodulation and so on) of the UL signals transmitted from the user terminal. Note that the receiving process section 304 can be formed with a signal processor or a signal processing circuit that is used in the technical field to which the present invention pertains.

The detection section 305 detects signals transmitted from other transmission points. For example, the detection section 305 can detect signals transmitted from other transmission points by executing LBT (Listen Before Talk) in predetermined timings. Also, signals that are detected in the detection section 305 are subjected to processes such as demodulation in the detection section 305 or in the receiving process section 304, and then output to the acquiring section 306. Note that the detection section 305 can be formed with a detector/measurer or a detection/measurement circuit that is used in the technical field to which the present invention pertains.

The acquiring section 306 acquires information about the transmission points corresponding to the signals detected in the detection section 305 (transmission point identification numbers, operator identification numbers and so on). The information about the transmission points can be reported from the transmitting/receiving sections 103 to the user terminal in a licensed band by using higher layer signaling and/or downlink control information. Note that the acquiring section 306 can be formed with a calculator or a calculation circuit that is used in the technical field to which the present invention pertains.

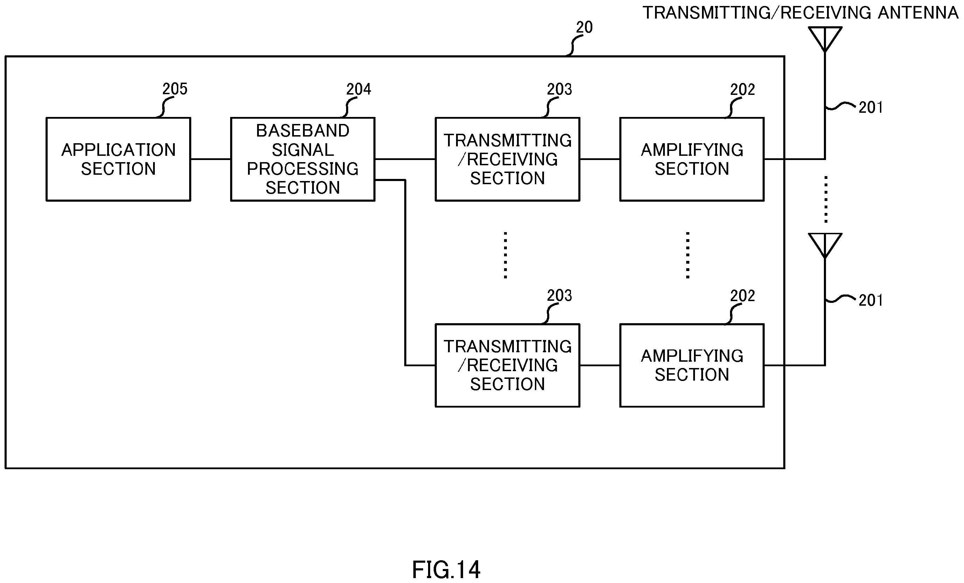

FIG. 14 is a diagram to show an overall structure of a user terminal 20 according to the present embodiment. The user terminal 20 has a plurality of transmitting/receiving antennas 201 for MIMO communication, amplifying sections 202, transmitting/receiving sections (receiving sections and transmitting sections) 203, a baseband signal processing section 204 and an application section 205.

As for downlink data, radio frequency signals that are received in the plurality of transmitting/receiving antennas 201 are each amplified in the amplifying sections 202, and subjected to frequency conversion and converted into the baseband signal in the transmitting/receiving sections 203. This baseband signal is subjected to receiving processes such as an FFT process, error correction decoding and retransmission control (HARQ-ACK), in the baseband signal processing section 204. In this downlink data, downlink user data is forwarded to the application section 205. The application section 205 performs processes related to higher layers above the physical layer and the MAC layer. Also, in the downlink data, the broadcast information is also forwarded to the application section 205.

Meanwhile, uplink user data is input from the application section 205 to the baseband signal processing section 204. In the baseband signal processing section 204, a retransmission control (HARQ-ACK) transmission process, channel coding, precoding, a DFT process, an IFFT process and so on are performed, and the result is forwarded to each transmitting/receiving section 203. The baseband signal that is output from the baseband signal processing section 204 is converted into a radio frequency band in the transmitting/receiving sections 203. After that, the amplifying sections 202 amplify the radio frequency signals having been subjected to frequency conversion, and transmit the resulting signals from the transmitting/receiving antennas 201.

Also, the transmitting/receiving sections 203 can receive DL signals from the licensed band and the unlicensed band. Also, the transmitting/receiving sections 203 have only to be capable of transmitting UL signals at least with respect to the licensed band. Obviously, the transmitting/receiving sections 203 may as well be structured to be capable of transmitting UL signals with respect to the unlicensed band. Furthermore, the transmitting/receiving sections 203 function as receiving sections to receive information related to an unlicensed band measurement command and/or a measurement result feedback command by using the licensed band. Note that the transmitting/receiving sections (transmission sections/receiving sections) 203 can be formed with transmitters/receivers, transmitting/receiving circuits (transmitting circuits/receiving circuits) or transmitting/receiving devices (transmitting devices/receiving devices) that are used in the technical field to which the present invention pertains.

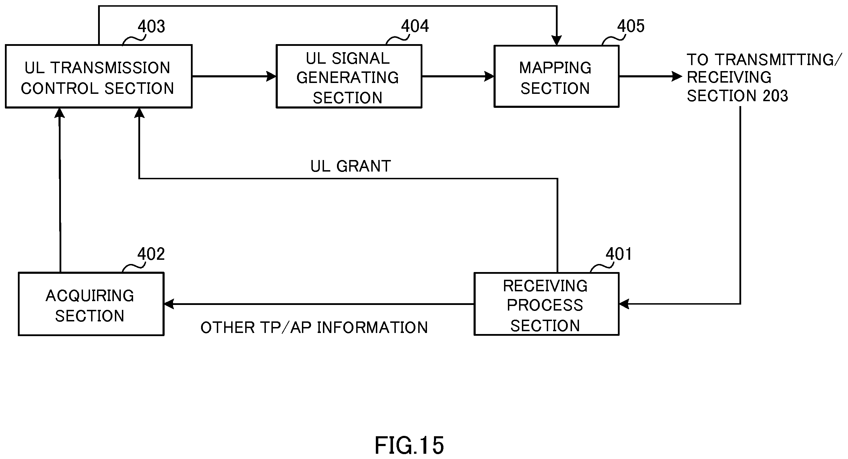

FIG. 15 is a diagram to show a principle functional structure of the baseband signal processing section 204 provided in the user terminal 20. Note that, although FIG. 15 primarily shows functional blocks that pertain to characteristic parts of the present embodiment, the user terminal 20 has other functional blocks that are necessary for radio communication as well.

As shown in FIG. 15, the user terminal 20 has a receiving process section 401, an acquiring section 402, a UL transmission control section 403 (control section), a UL signal generating section 404 and a mapping section 405.

The receiving process section 401 performs receiving processes (decoding, demodulation and so on) of DL signals that are transmitted in the licensed band and the unlicensed band. For example, the receiving process section 401 processes the data signals and demodulation reference signals received in the unlicensed band. Since the demodulation reference signals are linked with transmission point identification numbers and/or operator identification numbers, the receiving process section 401 can perform the receiving processes (interference cancelation process and so on) based on the transmission point identification numbers and/or operator identification numbers.

Also, the receiving process section 401, when receiving signals (for example, DSs, beacons, broadcast signals and so on from other transmission points) in a predetermined receiving period in the unlicensed band, demodulates the received signals and output the results to the acquiring section 402. Note that the receiving process section 401 can be formed with a signal processor or a signal processing circuit that is used in the technical field to which the present invention pertains.

The acquiring section 402 acquires information about transmission points (transmission point indicators and/or operator indicators and so on). For example, the acquiring section 402 can acquire information about other transmission points based on information output from the receiving process section 401. The receiving process section 401 can perform the interference cancelation process based on the information about other transmission points acquired in the acquiring section 402. Note that the acquiring section 402 can be formed with a calculator or a calculation circuit that is used in the technical field to which the present invention pertains.

Also, the information about transmission points acquired based on the signals received in the receiving process section 401 can be transmitted from the transmitting/receiving sections 203 to the radio base station 10 via the licensed band.

The UL transmission control section 403 controls the transmission of UL signals (UL data signals, UL control signals, reference signals and so on) to the radio base station in the licensed band and the unlicensed band. To be more specific, the UL transmission control section 403 controls the transmission of UL signals based on UL transmission commands (UL grants) transmitted from the radio base station. Note that the UL transmission control section 403 can be formed with a controller, a control circuit or a control device that is used in the technical field to which the present invention pertains.

The UL signal generating section 404 generates UL signals (the PUCCH signal, the PUSCH signal, the PRACH signal and so on) based on commands from the UL transmission control section 403. Also, when information about detected transmission points is transmitted to the radio base station, a UL signal to include this information is generated. Note that the UL signal generating section 404 can be formed with a signal generator or a signal generating circuit that is used in the technical field to which the present invention pertains.

The mapping section 407 controls the mapping (allocation) of UL signals based on commands from the UL transmission control section 403. Note that the mapping section 405 can be formed with a mapping circuit or a mapper that is used in the technical field to which the present invention pertains.

Note that the radio base stations and user terminals according to the present embodiment have hardware including a communication interface, a processor, a memory, a display and input keys, and, in the memory, software modules to be executed on the processor are stored. Also, the functional structures of the radio base stations and the user terminals may be implemented by using the above-described hardware, may be implemented by using the software modules to be executed on the processor, or may be implemented by combining both of these.

Now, although the present invention has been described in detail with reference to the above embodiment, it should be obvious to a person skilled in the art that the present invention is by no means limited to the embodiment described herein. The present invention can be implemented with various corrections and in various modifications, without departing from the spirit and scope of the present invention defined by the recitations of claims. For example, a plurality of examples described above may be combined and implemented as appropriate. Consequently, the description herein is only provided for the purpose of illustrating examples, and should by no means be construed to limit the present invention in any way.

The disclosure of Japanese Patent Application No. 2014-149501, filed on July 23, 2014, including the specification, drawings and abstract, is incorporated herein by reference in its entirety.

## Claims

1. A radio base station that communicates with a user terminal that is capable of using a licensed band and an unlicensed band, the radio base station comprising:
a detection section that detects signals transmitted from other transmission points;
an acquiring section that acquires identification numbers of transmission points corresponding to signals that are detected; and
a transmission section that transmits data signals and demodulation reference signals in the unlicensed band, wherein:
sequences of the demodulation reference signals are linked with identification numbers of the transmission points; and
the transmission section transmits information about identification numbers of the other transmission points to the user terminal.

2. The radio base station according to claim 1, wherein the sequences of the demodulation reference signals are linked with both the identification numbers of the transmission points and identification numbers of operators, and the transmission section transmits information about the identification numbers and operator numbers of the other transmission points to the user terminal.

3. The radio base station according to claim 1, wherein, when signals transmitted from a plurality of transmission points are detected in the detection section, the transmission section transmits information about identification numbers of transmission points where the power that is equal to or greater than a predetermined value is detected, to the user terminal.

4. The radio base station according to claim 1, wherein the transmission section transmits information about identification numbers of a plurality of transmission points detected in the detection section to the user terminal in advance through higher layer signaling, and transmits information about an identification number of a predetermined transmission point detected in the detection section to the user terminal by using downlink control information.

5. The radio base station according to one of claim 1 to claim 4, wherein the detection section detects the signals transmitted from the other transmission points by executing LBT (Listen Before Talk) in a predetermined timing.

6. A user terminal that is capable of communicating with a radio base station by using a licensed band and an unlicensed band, the user terminal comprising:
a receiving process section that processes data signals and demodulation reference signals received in the unlicensed band; and
an acquiring section that acquires information about identification numbers of transmission points corresponding to signals received in the receiving process section, wherein:
sequences of the demodulation reference signals are linked with identification numbers of transmission points; and
the receiving process section processes the received signals based on the information about the identification numbers of the transmission points.

7. The user terminal according to claim 6, wherein the acquiring section acquires the information about the identification numbers of the transmission points based on the signals received in the receiving process section.

8. The user terminal according to claim 6, further comprising a transmission section that transmits the information about the identification numbers of the transmission points acquired based on the received signals to the radio base station via the licensed band.

9. The user terminal according to one of claim 6 to claim 8, wherein the receiving process section performs an interference cancelation process (NAICS) based on the information about the identification numbers of the transmission points.

10. A radio communication method in a radio base station that communicates with a user terminal that is capable of using a licensed band and an unlicensed band, the radio communication method comprising the steps of:
detecting signals transmitted from other transmission points;
acquiring identification numbers of transmission points corresponding to signals that are detected;
transmitting data signals and demodulation reference signals in the unlicensed band; and
reporting information about identification numbers of the other transmission points to the user terminal,
wherein sequences of the demodulation reference signals are linked with identification numbers of the transmission points.
